(19) Europäisches Patentamt
European Patent Office
Office européen des brevets

(11) EP 4 692 863 A1

(12) **EUROPEAN PATENT APPLICATION**
published in accordance with Art. 153(4) EPC

(43) Date of publication:
**11.02.2026 Bulletin 2026/07**

(21) Application number: **24780830.6**

(22) Date of filing: **29.03.2024**

(51) International Patent Classification (IPC):
***G02B 3/00*** *(2006.01)* ***G02B 5/30*** *(2006.01)*
***G02C 7/12*** *(2006.01)*

(52) Cooperative Patent Classification (CPC):
**G02B 3/00; G02B 5/30; G02C 7/12**

(86) International application number:
**PCT/JP2024/013095**

(87) International publication number:
**WO 2024/204735 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059366**

(71) Applicant: **Sumitomo Bakelite Co.Ltd.**
**Shinagawa-ku**
**Tokyo 140-0002 (JP)**

(72) Inventor: **OYA, Hiroshi**
**Tokyo 140-0002 (JP)**

(74) Representative: **Müller-Boré & Partner**
**Patentanwälte PartG mbB**
**Friedenheimer Brücke 21**
**80639 München (DE)**

(54) **METHOD FOR PRODUCING LENS**

(57) The present invention provides a method for manufacturing a lens, which is capable of manufacturing a lens for eyeglasses from a polarized curved laminate with high yield and high reliability. The method for manufacturing a lens of the present invention includes a first step of obtaining a polarized curved laminate having a curved shape from a polarized laminate, a second step of bringing the polarized curved laminate into close contact with a mold, and a third step of forming a resin layer on the polarized curved laminate, in which, in the first step, the polarized laminate is bent in a state in which a curvature radius $R_{B1}$ and a curvature radius $R_{B2}$ of a curved concave surface of the mold, and a curvature radius $R_1$ and a curvature radius $R_2$ of a curved convex surface of the polarized curved laminate satisfy any one of a relational expression (A) or (B) and do not satisfy a relational expression (C).

$$0.70 \leq R_{B1}/R_1 \leq 1.00 \text{ and } 1.00 \leq R_{B2}/R_2 \leq 1.40 \quad \dots (A)$$

$$1.00 \leq R_{B1}/R_1 \leq 1.40 \text{ and } 0.70 \leq R_{B2}/R_2 \leq 1.00 \quad \dots (B)$$

$$0.95 < R_{B1}/R_1 < 1.06 \text{ and } 0.95 < R_{B2}/R_2 < 1.06 \quad \dots (C)$$

FIG. 3

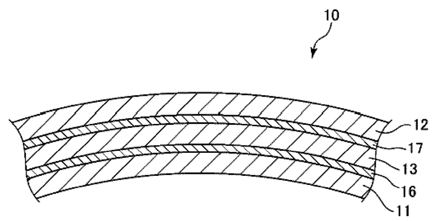


EP 4 692 863 A1

## Description

TECHNICAL FIELD

The present invention relates to a method for manufacturing a lens.

BACKGROUND ART

A lens for eyeglasses, including a polarized laminate (resin substrate) having a configuration in which both surfaces of a polarized film are coated with a coating layer formed of a polycarbonate-based resin, a polyamide-based resin, or the like as a main material, has been proposed.

In the lens (lens for eyeglasses), for example, the polarized laminate is punched out in a predetermined shape such as a circular shape in a plan view, in a state in which protective films are attached to the both surfaces of the polarized laminate having an overall shape of a flat plate. Thereafter, the polarized laminate is subjected to a thermal bending processing under heating to form a polarized curved laminate which has been bent into a curved shape by thermal bending. The protective films are peeled off from the polarized curved laminate, and a resin layer formed of a resin material such as a polycarbonate-based resin and a polyamide-based resin as a main material is formed on a concave surface of the polarized curved laminate by an insert injection molding method in a state in which the polarized curved laminate is adhered to a mold having a curved shape such that a concave portion of the mold and a convex portion of the polarized curved laminate are in contact with each other (for example, see Patent Document 1).

In the method for manufacturing a lens, generally, a curvature radius of the convex portion of the polarized curved laminate which has been bent into a curved shape by heat bending is set to be substantially the same as a curvature radius of the concave portion of the mold used in the insert injection molding method, whereby the polarized curved laminate is adhered to the mold.

However, as the curvature radius of the convex portion of the polarized curved laminate and the curvature radius of the concave portion of the mold used in the insert injection molding method are set to be substantially the same, in a case where the lens is manufactured by the insert injection molding method, that is, in a case where the resin layer is formed on the concave surface of the polarized curved laminate, the polarized curved laminate is not adhered to the mold with sufficient adhesiveness due to a slight deviation of a setting position of the polarized curved laminate with respect to the mold, an environment in which the polarized curved laminate is adhered, or the like, so that the polarized curved laminate falls off from the mold, which causes a problem in that the yield of the lens to be manufactured is reduced.

Citation List

Patent Document

Patent Document 1: Japanese Unexamined Patent Application No. 2009-294445

SUMMARY OF INVENTION

Technical Problem

An object of the present invention is to provide a method for manufacturing a lens, which is capable of manufacturing a lens for eyeglasses from a polarized curved laminate with high yield and high reliability.

Solution to Problem

Such objects can be achieved by the present invention described in the following items (1) to (7).

(1) A method for manufacturing a lens, including:

a step of preparing a polarized laminate having an overall shape of a flat plate, which includes a polarized film, a first resin layer provided on one surface side of the polarized film, and a second resin layer provided on the other surface side of the polarized film;

a first step of obtaining a polarized curved laminate by bending the polarized laminate into a curved shape in which one surface of the polarized laminate forms a curved concave surface and the other surface of the polarized laminate forms a curved convex surface;

a second step of bringing the polarized curved laminate into close contact with a mold having a curved concave

surface with a curvature radius $R_{B1}$ [mm] in one direction and a curvature radius $R_{B2}$ [mm] in an orthogonal direction orthogonal to the one direction, with the other surface side of the polarized curved laminate, which is the curved convex surface, facing the mold; and

a third step of forming a resin layer bonded to the polarized curved laminate on the one surface side of the polarized curved laminate, which is the curved concave surface, while maintaining the polarized curved laminate in close contact with the mold,

in which, in the other surface of the polarized curved laminate, which is the curved convex surface, in a case where a curvature radius in the one direction is defined as $R_1$ [mm] and a curvature radius in the orthogonal direction is defined as $R_2$ [mm],

in the first step, the polarized curved laminate is obtained by bending the polarized laminate in a state in which any one of the following relational expression (A) or (B) is satisfied and the following relational expression (C) is not satisfied,

$$0.70 \leq R_{B1}/R_1 \leq 1.00 \text{ and } 1.00 \leq R_{B2}/R_2 \leq 1.40 \text{ ... (A)},$$

$$1.00 \leq R_{B1}/R_1 \leq 1.40 \text{ and } 0.70 \leq R_{B2}/R_2 \leq 1.00 \text{ ... (B)},$$

$$0.95 < R_{B1}/R_1 < 1.06 \text{ and } 0.95 < R_{B2}/R_2 < 1.06 \text{ ... (C)}.$$

(2) The method for manufacturing a lens according to (1),
in which, in the first step, the polarized laminate is bent in a state in which the relational expression (A) is satisfied and a relationship of $1.07 < R_1/R_2 < 1.68$ is satisfied, or
in a state in which the relational expression (B) is satisfied and a relationship of $0.59 < R_1/R_2 < 0.93$ is satisfied.

(3) The method for manufacturing a lens according to (2),
in which, in the first step, the polarized laminate is bent in a state in which the following relational expression (1) is further satisfied,

$$0.93 < \sqrt{\frac{R_1 \cdot R_2}{R_{B1} \cdot R_{B2}}} < 1.15 \quad \cdots \quad (1)$$

(4) The method for manufacturing a lens according to any one of (1) to (3),
in which the curvature radius $R_{B1}$ and the curvature radius $R_{B2}$ are each independently 58 mm or more and 523 mm or less.

(5) The method for manufacturing a lens according to any one of (1) to (4),
in which the one direction of the polarized curved laminate is MD and the orthogonal direction of the polarized curved laminate is TD.

(6) The method for manufacturing a lens according to any one of (1) to (5),
in which the first resin layer and the second resin layer are each independently composed of a polycarbonate-based resin or a polyamide-based resin as a main material.

(7) The method for manufacturing a lens according to any one of (1) to (6),
in which a glass transition point of the main material is 100°C or higher and 190°C or lower.

Advantageous Effects of Invention

According to the present invention, in a case of manufacturing a lens for eyeglasses using a polarized curved laminate which has been bent into a curved shape by heat bending, that is, in a case of forming a resin layer on a curved concave surface of the polarized curved laminate, it is possible to accurately suppress or prevent the polarized curved laminate from falling off from a mold used for forming the resin layer. That is, the polarized curved laminate can be adhered to the mold with excellent adhesiveness. Therefore, a lens having excellent reliability can be manufactured with high yield.

BRIEF DESCRIPTION OF DRAWINGS

[FIG. 1] A perspective view showing an embodiment of sunglasses including a lens which includes a polarized curved laminate.

[FIGS. 2A to 2D] Longitudinal cross-sectional views showing an embodiment of the polarized curved laminate included in the lens.

[FIG. 3] A schematic view for describing a method for manufacturing a lens which includes a polarized curved laminate.

DESCRIPTION OF EMBODIMENTS

Hereinafter, the method for manufacturing a lens according to the present invention will be described in detail with reference to suitable embodiments shown in the accompanying drawings.

A main material in the present specification refers to a constitutional material which is contained in each layer at 50% by weight or more. For example, "coating layer formed of a polycarbonate-based resin or a polyamide-based resin as a main material" refers to that, in a case where the total weight of the coating layer is set to 100% by weight, the polycarbonate-based resin or the polyamide-based resin contained in the coating layer is 50% by weight or more.

The method for manufacturing a lens according to the embodiment of the present invention includes: a step of preparing a polarized laminate 15 having an overall shape of a flat plate, which includes a polarized film 13, a first resin layer 11 provided on one surface side of the polarized film 13, and a second resin layer 12 provided on the other surface side of the polarized film; a first step of obtaining a polarized curved laminate 10 by bending the polarized laminate 15 into a curved shape in which one surface of the polarized laminate 15 forms a curved concave surface and the other surface of the polarized laminate forms a curved convex surface; a second step of bringing the polarized curved laminate 10 into close contact with a mold 40 having a curved concave surface with a curvature radius $R_{B1}$ [mm] in one direction and a curvature radius $R_{B2}$ [mm] in an orthogonal direction orthogonal to the one direction, with the other surface side of the polarized curved laminate 10, which is the curved convex surface, facing the mold 40; and a third step of forming a resin layer 35 bonded to the polarized curved laminate 10 on the one surface side of the polarized curved laminate 10, which is the curved concave surface, while maintaining the polarized curved laminate 10 in close contact with the mold 40, thereby obtaining a lens 30. In addition, the method for manufacturing a lens according to the present invention is characterized in that, in the other surface of the polarized curved laminate 10, which is the curved convex surface, in a case where a curvature radius in the one direction is defined as $R_1$ [mm] and a curvature radius in the orthogonal direction is defined as $R_2$ [mm], in the first step, the polarized curved laminate 10 is obtained by bending the polarized laminate 15 in a state in which any one of the following relational expression (A) or (B) is satisfied and the following relational expression (C) is not satisfied.

$$0.70 \leq R_{B1}/R_1 \leq 1.00 \text{ and } 1.00 \leq R_{B2}/R_2 \leq 1.40 \quad \text{... (A)}$$

$$1.00 \leq R_{B1}/R_1 \leq 1.40 \text{ and } 0.70 \leq R_{B2}/R_2 \leq 1.00 \quad \text{... (B)}$$

$$0.95 < R_{B1}/R_1 < 1.06 \text{ and } 0.95 < R_{B2}/R_2 < 1.06 \quad \text{... (C)}$$

With the method for manufacturing a lens, in a case of manufacturing the lens 30 for eyeglasses using the polarized curved laminate 10 which has been bent into a curved shape by heat bending, that is, in a case of forming the resin layer 35 on the curved concave surface of the polarized curved laminate 10, it is possible to accurately suppress or prevent the polarized curved laminate 10 from falling off from the mold 40 used for forming the resin layer 35. That is, the polarized curved laminate 10 can be adhered to the mold 40 with excellent adhesiveness. Therefore, the lens 30 having excellent reliability can be manufactured with high yield.

The lens 30 including the polarized curved laminate 10, which is manufactured by adopting the method for manufacturing a lens according to the embodiment of the present invention, is used as a lens of, for example, sunglasses 100 which is a type of the eyeglasses. First, the sunglasses 100 including the lens 30 will be described before the method for manufacturing a lens according to the embodiment of the present invention is described.

<Sunglasses>

FIG. 1 is a perspective view showing an embodiment of the sunglasses including the lens which includes the polarized curved laminate, and FIGS. 2A to 2D are longitudinal cross-sectional views showing an embodiment of the polarized curved laminate included in the lens. In FIG. 1, when the sunglasses are worn on a head portion of a user, a surface of the lens on an eye-side of the user is referred to as a back side surface, and a surface on an opposite side thereof

is referred to as a front side surface. In addition, in FIGS. 2A to 2D, for convenience of description, the upper side of FIGS. 2A to 2D will be referred to as "upper" and the lower side thereof will be referred to as "lower".

As shown in FIG. 1, sunglasses 100 include a frame 20 and a lens 30 (lens for eyeglasses).

In the present specification, the term "lens" includes both a lens having a focusing function and a lens not having a focusing function.

The frame 20 is a member which is worn on the head portion of the user to dispose the lens 30 in the vicinity of the front of the eyes of the user.

The frame 20 has rim portions 21, a bridge portion 22, a temple portion 23, and a nose pad portion 24.

The rim portion 21 has a ring shape, and one rim portion is provided for each of the right eye and the left eye to correspond thereto, and the lens 30 is installed inside. As a result, the user can visually recognize external information through the lens 30.

In addition, the bridge portion 22 has a rod shape, and is located in front of an upper part of a nose of the user when worn on the head portion of the user to connect the pair of the rim portions 21.

The temple portion 23 has a bow shape, and is connected to an edge portion on a side opposite to a location of each of the rim portions 21 to which the bridge portion 22 is connected. The temple portion 23 is hung on an ear of the user when worn on the head portion of the user.

The nose pad portion 24 is provided on an edge portion of each of the rim portions 21 corresponding to the nose of the user when the sunglasses 100 are worn on the head portion of the user, abuts the nose of the user, and has a shape corresponding to an abutting portion of the nose. As a result, the worn state can be stably maintained.

A constituent material of each part constituting the frame 20 is not particularly limited, and various metal materials, various resin materials, and the like can be used, for example. A shape of the frame 20 is not limited to the illustrated configuration as long as the shape is mountable on the head portion of the user.

The lens 30 is a lens for glasses, which is mounted on each of the rim portions 21. The lens 30 is a member having light transmittance and having a plate shape which is bent toward the outside, includes a resin layer 35 and a polarized curved laminate 10, and is manufactured by adopting the method for manufacturing a lens according to the embodiment of the present invention, which will be described later.

The resin layer 35 has light transmittance, is located on the back side of the lens, and has a focusing function in a case of imparting a focusing function to the lens 30.

A constituent material of the resin layer 35 is not particularly limited as long as it is a resin material having light transmittance, and examples thereof include various thermoplastic resins and various curable resins such as a thermosetting resin and a photocurable resin, in which one or two or more kinds thereof can be used in combination.

Examples of the resin material include polyolefins such as polyethylene, polypropylene, and an ethylene-propylene copolymer, polyvinyl chloride, polystyrene, polyamide, polyimide, polycarbonate, poly-(4-methylpentene-1), ionomer, an acrylic resin, polymethyl methacrylate, an acrylonitrile-butadiene-styrene copolymer (ABS resin), an acrylonitrile-styrene copolymer (AS resin), a butadiene-styrene copolymer, polyesters such as polyethylene terephthalate (PET) and polybutylene terephthalate (PBT), polyether, polyether ketone (PEK), polyether ether ketone (PEEK), polyetherimide, polyacetal (POM), polyphenylene oxide, polysulfone, polyethersulfone, polyphenylene sulfide, polyarylate, aromatic polyester (liquid crystal polymer), polytetrafluoroethylene, polyvinylidene fluoride, other fluororesins, an epoxy resin, a phenol resin, a urea resin, a melamine resin, a silicone resin, polyurethane; and copolymers, blend materials, polymer alloys mainly made of these resins. Among the above, it is preferable that the resin material is the same type or the same as a resin material constituting the first resin layer 11 included in the polarized curved laminate 10, which will be described later. As a result, it is possible to improve adhesiveness between the resin layer 35 and the polarized curved laminate 10.

A thickness of the resin layer 35 is not particularly limited, and is preferably 0.5 mm or more and 5.0 mm or less, and more preferably 1.0 mm or more and 3.0 mm or less, for example. As a result, it is possible to achieve both relatively high intensity and weight reduction in the lens 30.

The polarized curved laminate 10 is a bent resin substrate which is formed into and bonded to a curved shape corresponding to the shape of the outer surface of the resin layer 35, that is, the curved convex surface, and thus the sunglass 100 is imparted with optical anisotropy. As a result, the sunglasses 100 exhibit a function as polarized sunglasses having optical anisotropy. The polarized curved laminate 10 is configured by the polarized curved laminate according to the present invention, and a detailed description thereof will be made later.

The polarized curved laminate 10 can be obtained by bending the polarized laminate 15 having an overall shape of a flat plate into a curved shape in the method for manufacturing the lens 30 described later. As shown in FIGS. 2A to 2D, the polarized curved laminate 10 includes a polarized film 13, a first resin layer 11 provided on one surface side of the polarized film 13, and a second resin layer 12 provided on the other surface side of the polarized film 13; and in the present embodiment, further includes an adhesive layer 16 which bonds (adheres) the polarized film 13 and the first resin layer 11 and an adhesive layer 17 which bonds (adheres) the polarized film 13 and the second resin layer 12.

(Polarized film 13)

The polarized film 13 has a function of extracting linearly polarized light having a polarization plane in one predetermined direction from incident light (natural light which is not polarized). As a result, light passing through the polarized curved laminate 10 (polarized laminate 15) is polarized.

A polarization degree of the polarized film 13 is not particularly limited, but for example, it is preferably 50% or more and 100% or less, and more preferably 80% or more and 100% or less. In addition, visible light transmittance of the polarized film 13 is not particularly limited, but for example, it is preferably 10% or more and 80% or less, and more preferably 20% or more and 50% or less.

A constituent material of the polarized film 13 is not particularly limited as long as the material has the above-described function, and examples thereof include a film obtained by adsorbing iodine or dyeing with a dichroic substance such as a dichroic dye on a polymer film configured of polyvinyl alcohol (PVA), partially formalized polyvinyl alcohol, polyethylene vinyl alcohol, polyvinyl butyral, polycarbonate, a partially saponified product of ethylene-vinyl acetate copolymer, and the like, and then uniaxially stretching the polymer film; and a polyene-based oriented film such as a dehydrated product of polyvinyl alcohol and a dehydrochlorinated product of polyvinyl chloride.

Among the above, the polarized film 13 is preferably a film obtained by adsorbing or dyeing a polymer film having polyvinyl alcohol (PVA) as a main material with iodine or a dichroic dye, and uniaxially stretching the polymer film. The polyvinyl alcohol (PVA) is a material which is excellent in all of transparency, heat resistance, affinity with the iodine or the dichroic dye which is a dyeing agent, and aligning properties during stretching. Therefore, the polarized film 13 containing PVA as a main material has excellent heat resistance and an excellent polarizing ability.

Examples of the above-described dichroic dye include Chlorantine Fast Red, Congo Red, Brilliant Blue 6B, Benzopurpurine, Chlorazol Black BH, Direct Blue 2B, Diamine Green, Chrysophenine, Sirius Yellow, Direct Fast Red, and Acid Black.

A thickness of the polarized film 13 is not particularly limited, but for example, it is preferably 5 μm or more and 60 μm or less, and more preferably 10 μm or more and 40 μm or less.

(First resin layer 11 and second resin layer 12)

As shown in FIGS. 2A to 2D, the first resin layer 11 and the second resin layer 12 are provided on the lower surface side (one surface side) and the upper surface side (the other surface side) of the polarized film 13, respectively, and thus function as a protective layer which protects the polarized film 13.

The first resin layer 11 and the second resin layer 12 are not particularly limited, but for example, are formed of a resin material such as a polyamide-based resin, a polycarbonate-based resin, and a cellulose resin such as triacetyl cellulose, as a main material; and one kind or two or more kinds of these materials can be used in combination. Among the above, it is preferable that the first resin layer 11 and the second resin layer 12 are formed of a polyamide-based resin or a polycarbonate-based resin as a main material.

In the first resin layer 11 and the second resin layer 12, it is preferable that the polycarbonate-based resin is contained at 85% or more, more preferably 90% or more, still more preferably 95% or more, and particularly preferably 97% or more. In addition, in the first resin layer 11 and the second resin layer 12, it is preferable that the polyamide-based resin is contained at 85% or more, more preferably 90% or more, still more preferably 95% or more, and particularly preferably 97% or more.

Since the polycarbonate-based resin has high transparency (light transmittance) and high mechanical strength such as rigidity, the transparency and the impact resistance of the polarized curved laminate 10 can be improved. In addition, since the polycarbonate-based resin has a specific gravity of approximately 1.2 and is classified as a light resin among resin materials, the polarized curved laminate 10 is lightened. In addition, the polyamide-based resin can improve chemical resistance, stress resistance, and the like, in addition to the transparency and the impact resistance.

The polyamide-based resin is not particularly limited, and various resins can be used; and examples thereof include alicyclic polyamides and semi-aromatic polyamides. The alicyclic polyamide is a material having excellent impact resistance. Therefore, the polarized curved laminate 10 having excellent impact resistance can be obtained. In addition, the semi-aromatic polyamide is a material having a high elastic modulus. Therefore, the polarized curved laminate 10 having excellent resistance to stress such as bending can be obtained.

In the present specification, the semi-aromatic polyamide denotes a polyamide in which one of a dicarboxylic acid or a diamine as a monomer constituting the polyamide is an aromatic compound and the other is an aliphatic compound, and can be specifically represented by Formula (1B).

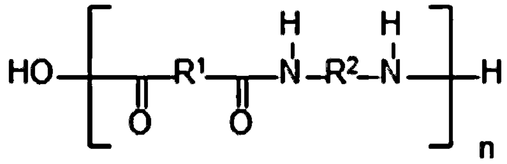

(1B)

(here, one of $R^1$ and $R^2$ in Formula (1B) represents a divalent aromatic substituent and the other represents a divalent aliphatic substituent, and n represents an integer of 2 or more)

The polyamide may be a copolymer (a random copolymer, a block copolymer, or the like) containing two or more kinds of the monomers for at least one of a dicarboxylic acid or a diamine.

In addition, the aromatic substituent as $R^1$ or $R^2$ in Formula (1B) is preferably a group represented by Formula (2B).

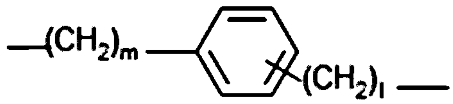

(2B)

(here, in Formula (2B), 1 and m each independently represent an integer of 0 or more and 2 or less)

As a result, the polarized film 13 can be more suitably protected, and processability of the polarized curved laminate 10 is more excellent. In addition, in a case where a retardation is imparted to the resin layers 11 and 12, the retardation can be more easily controlled by the stretching of the resin layers 11 and 12.

The aliphatic substituent as $R^1$ or $R^2$ in Formula (1B) is preferably a substituent having 4 or more and 18 or less carbon atoms, more preferably a hydrocarbon group having 4 or more and 18 or less carbon atoms, and still more preferably a saturated hydrocarbon group having 4 or more and 18 or less carbon atoms.

As a result, the processability of the polarized curved laminate 10 is more excellent.

Furthermore, the semi-aromatic polyamide preferably includes an aromatic dicarboxylic acid and an aliphatic diamine as constituent monomers. As a result, the polarized film 13 can be more suitably protected, and the processability of the polarized curved laminate 10 is more excellent. In addition, the retardation can be more easily controlled by stretching.

The alicyclic polyamide has an alicyclic chemical structure in a molecule thereof, and may have an alicyclic chemical structure in a main chain structure or in a side chain structure.

Examples of the alicyclic polyamide include a compound in which at least one of a dicarboxylic acid or a diamine as a monomer constituting the polyamide has an alicyclic chemical structure, and specific examples thereof include an alicyclic polyamide can be represented by Formula (3B).

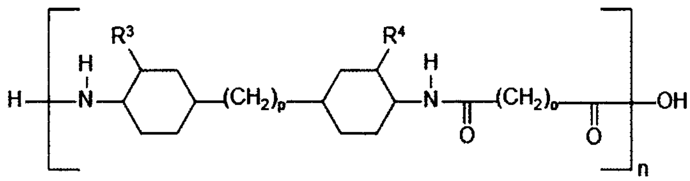

(3B)

(here, in Formula (3B), $R^3$ and $R^4$ each independently represent a hydrogen atom or a hydrocarbon group having 4 or less carbon atoms, o represents an integer of 2 or more and 14 or less, p represents an integer of 0 or more and 6 or less, and n represents an integer of 2 or more)

The polycarbonate-based resin is not particularly limited, and various resins can be used; and among these, an aromatic polycarbonate-based resin is preferable. The aromatic polycarbonate-based resin has an aromatic ring in the main chain, whereby the strength of the polarized curved laminate 10 is more excellent.

The aromatic polycarbonate-based resin is synthesized, for example, by an interfacial polycondensation reaction between bisphenol and phosgene, an ester exchange reaction between bisphenol and diphenyl carbonate, or the like.

Examples of the bisphenol include bisphenol A and a bisphenol (modified bisphenol) serving as an origin of a repeating unit of a polycarbonate represented by Formula (1A).

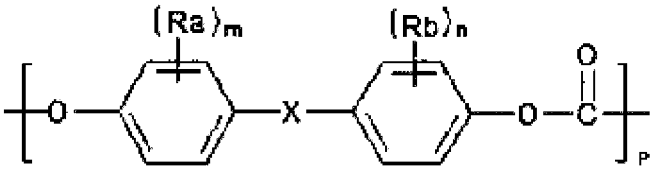

(1A)

(in Formula (1A), X represents an alkyl group having 1 to 18 carbon atoms, an aromatic group, or a cyclic aliphatic group, Ra and Rb each independently represent an alkyl group having 1 to 12 carbon atoms, m and n each independently represent an integer of 0 to 4, and p represents the number of repeating units)

Specific examples of the above-described bisphenol serving as the origin of the repeating unit of the polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane, in which one or two or more kinds thereof can be used in combination.

As the polycarbonate-based resin, a bisphenol-type polycarbonate-based resin having a skeleton derived from bisphenol is particularly preferably used as a main component. By using such a bisphenol-type polycarbonate-based resin, the polarized curved laminate 10 exhibits more excellent strength.

A glass transition temperature (Tg) of the resin material contained in the first resin layer 11 and the second resin layer 12 as a main material is preferably 100°C or higher and 190°C or lower, and more preferably 105°C or higher and 155°C or lower. As a result, the formation of the polarized curved laminate 10 by the thermal bending processing of the polarized laminate 15 in the step [3] of the method for manufacturing the lens 30 described later can be relatively easily performed. In addition, in a case where the retardation is exhibited in the first resin layer 11 and the second resin layer 12, the stretching for exhibiting the retardation can be suitably performed. Furthermore, the durability and reliability of the polarized curved laminate 10 can be improved.

In addition, the first resin layer 11 and the second resin layer 12 may contain other components in addition to the resin material contained as a main material. Such a component is not particularly limited, and examples thereof include a resin material other than the main material, a colorant such as a dye, a filling material, an alignment aid, a stabilizer (a thermal stabilizer, an ultraviolet absorber, an antioxidant, and the like), a plasticizer, a colorant, a flame retardant, an antistatic agent, and a viscosity modifier.

In this case, a content of the resin material in the first resin layer 11 or the second resin layer 12 is not particularly limited, but is preferably 75 parts by mass or more, more preferably 85 parts by mass or more, still more preferably 90 parts by mass or more, and particularly preferably 97 parts by mass or more with respect to 100 parts by mass of the first resin layer 11 or the second resin layer 12. By setting the content of the resin material within the above-described range, the polarized curved laminate 10 having excellent strength can be obtained.

Constituent materials constituting the first resin layer 11 and the second resin layer 12 may be the same or different from each other.

Furthermore, in a case where the retardation is exhibited in the first resin layer 11 and the second resin layer 12, it is preferable that the retardation of the first resin layer 11 and the retardation of the second resin layer 12 are different from each other, and it is preferable that the retardation of the first resin layer 11 is lower than the retardation of the second resin layer 12.

As a result, the second resin layer 12 is likely to be deformed in a direction in which the curvature is reduced by thermal contraction, but the first resin layer 11 can be made less likely to be deformed by thermal contraction. Therefore, as shown in FIGS. 2A to 2D, the polarized curved laminate 10 included in the lens 30 is used in a bent curved state, but in this case, it is preferable to form the curved shape such that the second resin layer 12 is positioned on a curved convex surface side and the first resin layer 11 is positioned on a curved concave surface side. In this case, since the second resin layer 12 has a relatively high thermal contraction rate, the second resin layer 12 is likely to be thermally deformed; but in the polarized curved laminate 10, the first resin layer 11 exhibits a function of suppressing the thermal deformation of the second resin layer 12. Therefore, the entire polarized curved laminate 10 can prevent excessive deformation due to heat. As a result, it is possible to accurately suppress or prevent the shape of the lens 30 itself from being deformed due to the thermal deformation of the polarized curved laminate 10.

The retardation of the first resin layer 11 is preferably 0 nm or more and 500 nm or less, and more preferably 50 nm or more and 350 nm or less. The retardation of the second resin layer 12 is preferably 2,600 nm or more and 8,000 nm or less, and more preferably 3,500 nm or more and 6,500 nm or less. As a result, the retardation of the first resin layer 11 can be sufficiently reduced, and the retardation of the second resin layer 12 can be sufficiently increased. Therefore, the polarization performance of the polarized curved laminate 10 can be sufficiently improved.

The difference in retardation between the first resin layer 11 and the second resin layer 12 can be expressed by making the constituent material contained in the layer, the thickness, the stretching ratio, and the like different.

An average thickness of the first resin layer 11 and the second resin layer 12 is not particularly limited, but for example, it is preferably 0.05 mm or more and 0.5 mm or less, and preferably 0.1 mm or more and 0.4 mm or less.

The stretching ratio of the first resin layer 11 is not particularly limited, but for example, it is preferably 0.95 or more and 1.1 or less such that the above-described magnitude of the retardation is set. The stretching ratio of the second resin layer 12 is not particularly limited, but for example, it is preferably 1.5 or more and 3.5 or less such that the above-described magnitude of the retardation is set.

In addition, it is preferable that stretching directions of the first resin layer 11, the second resin layer 12, and the polarized film 13 match. As a result, the polarization performance of the polarized curved laminate 10 can be further improved.

(Adhesive layer 16 and adhesive layer 17)

The adhesive layer 16 (first adhesive layer) and the adhesive layer 17 (second adhesive layer) have functions of bonding the polarized film 13 and the first resin layer 11 and bonding the polarized film 13 and the second resin layer 12, respectively. As a result, the durability of the polarized curved laminate 10 can be improved.

An adhesive (or a pressure sensitive adhesive) constituting the adhesive layers 16 and 17 is not particularly limited, and examples thereof include acrylic adhesives, urethane adhesives, epoxy adhesives, and silicone adhesives. Among the above, urethane adhesives are preferable. As a result, the adhesive layers 16 and 17 have excellent transparency, adhesion strength, and durability, and particularly excellent followability to shape change.

A thickness of the adhesive layers 16 and 17 is not particularly limited, but for example, it is preferably 5 μm or more and 60 μm or less, and more preferably 10 μm or more and 40 μm or less. As a result, the function as the adhesive layers 16 and 17 can be reliably imparted.

In addition, the adhesive layers 16 and 17 can be removed depending on the configuration of the first resin layer 11, the second resin layer 12, and the polarized film 13.

In addition, the total thickness of the polarized curved laminate 10 is preferably 0.1 mm or more and 2 mm or less.

In the sunglass 100 having such a configuration, as described above, the lens 30 may or may not have a focusing function.

In addition, from the viewpoint of fashionability, lightness, and the like, the sunglasses 100 may have a configuration without the frame, in addition to the configuration having the frame 20 as described above.

Furthermore, in the present embodiment, the eyeglasses according to the present invention are applied to the sunglasses 100, but the present invention is not limited thereto; and the eyeglasses according to the present invention may be, for example, eyeglasses with a prescription, non-prescription eyeglasses, and goggles that protect the eyes from wind, rain, dust, debris, chemicals, and the like.

In the sunglasses 100 having the above-described configuration, the lens 30 included in the sunglasses 100 is manufactured by the method for manufacturing the lens 30 according to the embodiment of the present invention, as described below.

<Method for manufacturing lens>

FIG. 3 is a schematic view for describing a method for manufacturing a lens which includes a polarized curved laminate. Hereinafter, for convenience of description, the upper side of FIG. 1 will be referred to as "upper" and the lower side thereof will be referred to as "lower".

Hereinafter, each step of the method for manufacturing the lens 30 including the polarized curved laminate 10 will be described in detail.

[1] First, the polarized laminate 15 having an overall shape of a flat plate, in which the first resin layer 11, the polarized film 13, and the second resin layer 12 are provided and laminated in this order, is prepared. That is, the polarized laminate 15 having an overall shape of a flat plate, which includes the polarized film 13, the first resin layer 11 provided on one surface side of the polarized film, and the second resin layer 12 provided on the other surface side of the polarized film 13, is prepared. By attaching protective films 50 (masking tapes) to both surfaces of the polarized laminate 15, the protective films 50 are attached to the both surfaces of the polarized laminate 15 to obtain a multilayer laminate 150 (see FIG. 1A).

[2] Next, as shown in FIG. 1B, the prepared multilayer laminate 150, that is, the polarized laminate 15 in a state in which the protective films 50 are attached to the both surfaces of the polarized laminate 15 is punched in a thickness direction thereof, thereby forming the multilayer laminate 150 into a circular shape in a plan view.

[3] Next, as shown in FIG. 1C, a thermal bending processing is performed on the multilayer laminate 150 having a circular shape under heating, thereby forming, from the multilayer laminate 150, a curved multilayer laminate 200 having a curved shape in which the first resin layer 11 side forms a curved concave surface and the second resin layer

12 side forms a curved convex surface. As a result, the polarized laminate 15 having a flat plate shape can be formed into the polarized curved laminate 10 having a curved shape in a state in which the protective films 50 are attached to both surfaces.

The thermal bending processing is typically carried out by press molding or vacuum molding.

As described above, in the present embodiment, a heating temperature (molding temperature) of the multilayer laminate 150 (polarized laminate 15) in this case is set to preferably approximately 110°C or higher and 170°C or lower and more preferably approximately 140°C or higher and 160°C or lower, in consideration of the fact that the polarized laminate 15 includes the resin layers 11 and 12 and the fact of melting or softening temperature of the resin layers 11 and 12. By setting the heating temperature within a certain range, the polarized laminate 15 can be softened or melted while preventing degradation and deterioration of the polarized laminate 15, and the polarized laminate 15 can be reliably thermally bent to form the polarized curved laminate 10 having a curved shape.

The first step is configured to obtain the polarized curved laminate by bending the polarized laminate 15 through the steps [1] to [3] described above.

[4] Next, the protective films 50 are peeled off from the polarized curved laminate 10 which has been subjected to the thermal bending. Thereafter, as shown in FIG. 3D, the second resin layer 12 abuts the curved concave surface of the mold 40 having the curvature radius of $R_{B1}$ [mm] in one direction and the curvature radius of $R_{B2}$ [mm] in an orthogonal direction orthogonal to the one direction, with the second resin layer 12 (the other surface) side of the polarized curved laminate 10, which is the curved convex surface, facing the mold 40, so that the polarized curved laminate 10 is brought into close contact with (adhered to) the mold 40 (second step).

[5] Next, the resin layer 35 is formed to be bonded to the polarized curved laminate 10 on the first resin layer 11 (one surface) side of the polarized curved laminate 10, which is the curved concave surface, while maintaining a state in which the polarized curved laminate 10 is in close contact with the mold 40 (third step). As a result, the lens 30 including the polarized curved laminate 10 that has been thermally bent and the resin layer 35 is manufactured.

The resin layer 35 can be of the same type as the first resin layer 11 and the second resin layer 12, and in a case where the first resin layer 11 is polycarbonate, the resin layer 35 is preferably a polycarbonate resin. In addition, in a case where the first resin layer 11 is polyamide, the resin layer 35 is preferably a polyamide resin.

In addition, the resin layer 35 may contain other components in addition to the resin material contained as a main material. Such a component is not particularly limited, and examples thereof include a resin material other than the main material, a colorant such as a dye, a filling material, an alignment aid, a stabilizer (a thermal stabilizer, an ultraviolet absorber, an antioxidant, and the like), a plasticizer, a colorant, a flame retardant, an antistatic agent, and a viscosity modifier.

In this case, a content of the resin material in the resin layer 35 is not particularly limited, but is preferably 75 parts by mass or more, more preferably 85 parts by mass or more, still more preferably 90 parts by mass or more, and particularly preferably 97 parts by mass or more with respect to 100 parts by mass of the resin layer 35. By setting the content of the resin material within the above-described range, the polarized curved laminate 10 having excellent strength can be obtained.

The resin layer 35 is formed on the first resin layer 11 side of the polarized curved laminate 10 by, for example, insert injection molding by an insert injection molding method, in which the resin layer 35 formed of the resin material is injection-molded on the curved concave surface of the polarized curved laminate 10.

In addition, among insert injection molding methods, an injection compression molding method is preferably used. The injection compression molding method is a method of injecting the resin material for forming the resin layer 35 into the mold 40 at a low pressure and then closing the mold 40 at a high pressure to apply a compression force to the resin material, so that the injection compression molding method is preferably used because the resin layer 35 as a molded article, that is, the lens 30 is less likely to cause optical anisotropy due to molding distortion or local alignment of resin molecules during the molding. In addition, by controlling the mold compression force uniformly applied to the resin material, the resin material can be cooled with a constant specific volume, so that the resin layer 35 having high dimensional accuracy can be obtained.

As in the method for manufacturing a lens above, in the present invention, in a case of forming the polarized curved laminate 10 by bending the polarized laminate 15 into a curved shape in the above-described step [3], a degree of curvature is set such that, in a case where, in the curved convex surface of the polarized curved laminate 10 on the other surface side, the curvature radius in the one direction is defined as $R_1$ [mm] and the curvature radius in the orthogonal direction is defined as $R_2$ [mm], any one of the following relational expression (A) or the following relational expression (B) is satisfied and the following relational expression (C) is not satisfied.

$$0.70 \leq R_{B1}/R_1 \leq 1.00 \text{ and } 1.00 \leq R_{B2}/R_2 \leq 1.40 \ldots (A)$$

$$1.00 \leq R_{B1}/R_1 \leq 1.40 \text{ and } 0.70 \leq R_{B2}/R_2 \leq 1.00 \ldots (B)$$

$$0.95 < R_{B1}/R_1 < 1.06 \text{ and } 0.95 < R_{B2}/R_2 < 1.06 \ldots (C)$$

Here, in the above-described step [5] of the method for manufacturing a lens described above, in a case of forming the resin layer 35 on the polarized curved laminate 10, it is necessary to cause the polarized curved laminate 10 having the curved shape to adhere to the curved concave surface of the mold 40 without falling off such that the curved convex surface of the polarized curved laminate 10 corresponds to the curved concave surface. That is, in the above-described step [5], it is necessary to form the resin layer 35 on the curved concave surface of the polarized curved laminate 10 in a state in which the adhesion of the polarized curved laminate 10 to the mold 40 is maintained by the above-described step [4].

In particular, in a case where the insert injection molding method is used, and in particular, in a case where the injection compression molding method is used as the method of forming the resin layer 35, since the resin material for forming the resin layer 35 is injected into the mold 40 at a low pressure, it is necessary to cause the polarized curved laminate 10 to adhere to the curved concave surface of the mold 40 with high positional accuracy in this case.

In addition, in a case where the mold 40 is disposed such that an opening portion of the curved concave surface of the mold 40 is along a vertical direction as shown in FIG. 3D, that is, in a case where the mold 40 is disposed to be upright in the vertical direction, it can be said that the polarized curved laminate 10 has a high possibility of frequently falling off from the mold 40 in a case of forming the resin layer 35. Therefore, it is necessary to reliably cause the polarized curved laminate 10 to adhere to the curved concave surface of the mold 40 in this case.

In a case where such a request is made, in the above-described step [3] of forming the polarized curved laminate 10 having a curved shape by performing the thermal bending processing on the polarized laminate 15 having a flat plate shape under heating, the polarized curved laminate 10 is usually produced by setting the curvature of the curved convex surface of the polarized curved laminate 10 to be substantially the same as the curvature of the curved concave surface of the mold 40 used in the above-described step [4]. However, in this case, there is a problem in that the polarized curved laminate 10 frequently falls off from the mold 40 due to a slight deviation of the setting position of the polarized curved laminate 10 with respect to the mold 40, an environment in which the polarized curved laminate 10 is adhered, or the like, which makes it difficult to adhere the polarized curved laminate 10 to the mold 40 with sufficient adhesiveness.

As a result of intensive studies on such a problem, the present inventor has found that the frequency of the polarized curved laminate 10 falling off from the mold 40 can be reduced by intentionally causing a deviation between the curvature of the curved convex surface of the polarized curved laminate 10 and the curvature of the curved concave surface of the mold 40 without making the curvatures match.

Then, the present inventor has further studied the magnitude of the deviation. The present inventor has maintained both the deviation of the polarized curved laminate 10 with respect to the mold 40 in the one direction and the deviation of the polarized curved laminate 10 with respect to the mold 40 in the orthogonal direction at a magnitude of a certain level or more such that the following relational expression (C) is not satisfied; and has set the magnitude of one of the deviation of the polarized curved laminate 10 with respect to the mold 40 in the one direction and the deviation of the polarized curved laminate 10 with respect to the mold 40 in the orthogonal direction to be large and the magnitude of the other to be small such that any one of the following relational expression (A) or the following relational expression (B) is satisfied. Therefore, it has been found that the polarized curved laminate 10 can be reliably adhered to the mold 40 with excellent adhesiveness to accurately suppress or prevent the polarized curved laminate 10 from falling off from the mold 40; and as a result, the lens 30 having excellent reliability can be manufactured with a high yield, and the present invention has been completed.

$$0.70 \leq R_{B1}/R_1 \leq 1.00 \text{ and } 1.00 \leq R_{B2}/R_2 \leq 1.40 \ldots (A)$$

$$1.00 \leq R_{B1}/R_1 \leq 1.40 \text{ and } 0.70 \leq R_{B2}/R_2 \leq 1.00 \ldots (B)$$

$$0.95 < R_{B1}/R_1 < 1.06 \text{ and } 0.95 < R_{B2}/R_2 < 1.06 \ldots (C)$$

The curved concave surface of the mold 40 is set such that the curvature thereof corresponds to the lens 30 to be molded, and is usually set to one curve or more and nine curves or less in both the one direction and the orthogonal direction. In a case where the curvature is converted into the curvature radius $R_{B1}$ and the curvature radius $R_{B2}$, the curvature radius $R_{B1}$ and the curvature radius $R_{B2}$ are set to be each independently 58 mm or more and 523 mm or less. In addition, it is preferable that the one direction is a flow direction (MD) and the orthogonal direction is a direction (TD)

perpendicular to the flow direction in consideration of a polarization direction of the lens 30.

In a case of forming the lens 30, it is sufficient that the deviation amounts of the curvature radius $R_{B1}$ and the curvature radius $R_{B2}$ with respect to the curvature radius $R_1$ and the curvature radius $R_2$ are set such that any one of the relational expression (A) or the relational expression (B) is satisfied and the relational expression (C) is not satisfied. However, it is preferable that any one of the following relational expression (a1) or the following relational expression (b1) is satisfied while the relational expression (C) is not satisfied, and it is more preferable that any one of the following relational expression (a2) or the following relational expression (b2) is satisfied while the relational expression (C) is not satisfied. As a result, it is possible to further significantly reduce the frequency of the polarized curved laminate 10 falling off from the mold 40.

$$0.75 \leq R_{B1}/R_1 \leq 0.95 \text{ and } 1.03 \leq R_{B2}/R_2 \leq 1.30 \quad \ldots \text{(a1)}$$

$$1.03 \leq R_{B1}/R_1 \leq 1.30 \text{ and } 0.75 \leq R_{B2}/R_2 \leq 0.95 \quad \ldots \text{(b1)}$$

$$0.76 \leq R_{B1}/R_1 \leq 0.93 \text{ and } 1.06 \leq R_{B2}/R_2 \leq 1.29 \quad \ldots \text{(a2)}$$

$$1.06 \leq R_{B1}/R_1 \leq 1.29 \text{ and } 0.76 \leq R_{B2}/R_2 \leq 0.93 \quad \ldots \text{(b2)}$$

Furthermore, it is preferable that the curvature radius $R_1$ and the curvature radius $R_2$ satisfy at least one of the following two relational expressions.

Specifically, in a case where the above-described relational expression (A) is satisfied, it is preferable to further satisfy $1.07 < R_1/R_2 < 1.68$, and it is more preferable to further satisfy $1.26 < R_1/R_2 < 1.67$. In addition, in a case where the above-described relational expression (B) is satisfied, it is preferable to further satisfy $0.59 < R_1/R_2 < 0.93$, and it is more preferable to further satisfy $0.60 < R_1/R_2 < 0.79$.

In addition, it is preferable that the following relational expression (1) is satisfied, and it is more preferable that the following relational expression (1') is satisfied.

$$0.93 < \sqrt{\frac{R_1 \cdot R_2}{R_{B1} \cdot R_{B2}}} < 1.15 \quad \cdots \text{(1)}$$

$$0.97 < \sqrt{\frac{R_1 \cdot R_2}{R_{B1} \cdot R_{B2}}} < 1.06 \quad \cdots \text{(1')}$$

By setting the relational expressions of the curvature radius $R_{B1}$ and the curvature radius $R_{B2}$ with respect to the curvature radius $R_1$ and the curvature radius $R_2$ within the above-described ranges, it is possible to further significantly reduce the frequency of the polarized curved laminate 10 falling off from the mold 40. Therefore, the lens 30 having excellent reliability can be further manufactured with high yield.

A shape of the lens 30 can be formed to be substantially the same as the shape of the mold 40, and a curvature radius of the lens 30 can be made to be substantially the same as $R_{B1}$ and $R_{B2}$, which are the curvature radii of the mold 40. Thereafter, the final product can be obtained by performing formation of a hard coat, polishing, or the like.

The method for manufacturing a lens according to the embodiment of the present invention has been described above, but the present invention is not limited thereto.

For example, in the method for manufacturing a lens according to the embodiment of the present invention, one or more steps can be added for any purpose.

[Examples]

Hereinafter, the present invention will be described in detail based on Examples, but the present invention is not limited thereto.

1. Production of polarized curved laminate

(Example 1)

First, a polyvinyl alcohol-based film was dyed with an aqueous solution in which a dye was dissolved while stretching the polyvinyl alcohol-based film in a water tank, and was treated with boric acid. Thereafter, the treated polyvinyl alcohol-based film was washed with water and dried. As a result, a polarized film 13 having a thickness of 35 μm was obtained.

On the other hand, a sheet-like first resin layer 11 having a thickness of 0.2 mm was obtained by extrusion molding using a vent-type single-screw extruder, using a polyamide-based resin (alicyclic polyamide, manufactured by EMS-CHEMIE HOLDING AG, "Grilamid TR90") as a first resin material.

In addition, a first sheet having a thickness of 0.5 mm was obtained by extrusion molding using the vent-type single-screw extruder, using a polyamide-based resin (manufactured by EMS-CHEMIE HOLDING AG, "Grilamid TR90") as a second resin material. The first sheet was heated to 120°C and uniaxially stretched to twice the original length to obtain a sheet-like second resin layer 12 having a thickness of 0.4 mm.

Next, a two-liquid moisture-curable polyurethane adhesive (main agent: "TAKELAC A-520" manufactured by Mitsui Chemicals, Inc., curing agent: "TAKENATE A-50" manufactured by Mitsui Chemicals, Inc.) was applied, as a first adhesive, onto one surface of the first resin layer 11 using a bar coater such that the thickness after drying was 20 μm. In addition, a two-liquid moisture-curable polyurethane adhesive (main agent: "TAKELAC A-520" manufactured by Mitsui Chemicals, Inc., curing agent: "TAKENATE A-50" manufactured by Mitsui Chemicals, Inc.) was applied, as a second adhesive, onto one surface of the second resin layer 12 using a bar coater such that the thickness after drying was 20 μm.

Next, the first resin layer 11 and the second resin layer 12, onto which the first adhesive and the second adhesive were respectively applied, were placed in an oven, and heated until the solvent content in the first adhesive and the second adhesive was dried. As a result, a first laminate in which an adhesive layer 16 (first adhesive layer) was laminated on one surface of the first resin layer 11 was obtained, and a second laminate in which an adhesive layer 17 (second adhesive layer) was laminated on one surface of the second resin layer 12 was obtained.

Thereafter, the first laminate was laminated on one surface of the polarized film 13 such that the adhesive layer 16 was in contact therewith, and the second laminate was laminated on the other surface of the polarized film 13 such that the adhesive layer 17 was in contact therewith, thereby obtaining the polarized laminate 15. In this case, the first laminate, the polarized film 13, and the second laminate were respectively pressed using a rubber roll of a laminator machine, thereby setting the total thickness of the polarized laminate 15 to 0.75 mm.

A protective film 50 formed of a polyolefin was laminated on both surface sides of the polarized laminate 15, that is, on the surface of the first resin layer 11 opposite to the polarized film 13 and on the surface of the second resin layer 12 opposite to the polarized film 13, respectively, by a lamination method.

Next, the polarized laminate 15 was punched out into a diameter of 8 cm, and then subjected to a thermal bending processing while being sucked using a REMA forming machine (vacuum forming machine) (CR-32 type) at 150°C for 10 minutes, thereby obtaining a polarized curved laminate 10 of Example 1, in which the curvature radius $R_1$ in the MD (one direction) was 80.5 mm and the curvature radius $R_2$ in the TD (orthogonal direction orthogonal to the one direction) was 87.2 mm.

(Examples 2 to 9, Example 11, and Comparative Examples 1 to 3)

Polarized curved laminates 10 of Examples 2 to 9, Example 11, and Comparative Examples 1 to 3 were obtained in the same manner as in Example 1, except that the polarizing curved laminate 10 having the curvature radius $R_1$ and the curvature radius $R_2$ as shown in Table 1 was obtained by appropriately changing the conditions in obtaining the first resin layer 11 and the second resin layer 12, and then subjecting the polarized laminate 15 to the thermal bending processing while being sucked using the REMA forming machine (vacuum forming machine) (CR-32 type).

(Example 10)

A polarized curved laminate 10 of Example 10 was obtained in the same manner as in Example 1, except that each of the first resin material used in the formation of the first resin layer 11 and the second resin material used in the formation of the second resin layer 12 was changed from the polyamide-based resin (manufactured by EMS-CHEMIE HOLDING AG, "Grilamid TR90") to a polycarbonate-based resin (manufactured by Mitsubishi Engineering-Plastics Corporation, "Iupilon E-2000"), and the polarizing curved laminate 10 having the curvature radius $R_1$ and the curvature radius $R_2$ as shown in Table 1 was obtained by subjecting the polarized laminate 15 to the thermal bending processing while being sucked using the REMA forming machine (vacuum forming machine) (CR-32 type).

2. Evaluation (Peeling of polarized curved laminate 10 from mold 40)

Each of the polarized curved laminates 10 of Examples and Comparative Examples was evaluated as follows.

That is, each of the polarized curved laminates 10 of Examples and Comparative Examples was adhered to the mold 40 having a curved concave surface with the curvature radius $R_{B1}$ [mm] and the curvature radius $R_{B2}$ [mm] as shown in Table 1, and the presence or absence of peeling from the mold 40 after 5 seconds was confirmed.

The presence or absence of peeling of each the polarized curved laminates 10 of Examples and Comparative Examples was confirmed for 100 pieces of Examples and Comparative Examples.

Table 1 shows the evaluation results obtained in the evaluation of peeling of the polarized curved laminate 10.

[Table 1]

| | | | Example | | | | | | | | | | | Comparative Example | | |
|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| First resin layer 11 Second resin layer 12 | Resin material | Polyamide-based resin (Grilamid G21) | ○ | ○ | ○ | ○ | ○ | ○ | ○ | ○ | ○ | | ○ | ○ | ○ | ○ |
| | | Polycarbonate-based resin (Iupilon E-2000) | | | | | | | | | | ○ | | | | |
| Thermal bending proc | Curvature radius $R_1$ in MD (mm) | | 80.5 | 80.5 | 80.5 | 81.7 | 67.9 | 74.7 | 77.5 | 83.7 | 87.2 | 80.5 | 95.1 | 61.5 | 87.2 | 130.8 |
| | Curvature radius $R_2$ in TD (mm) | | 87.2 | 95.1 | 104.6 | 113.7 | 113.7 | 95.1 | 104.6 | 104.6 | 104.6 | 104.6 | 80.5 | 104.6 | 87.2 | 130.8 |
| Mold 40 | Curvature radius $R_{B1}$ [mm] in MD of curved concave surface | | 87.2 | 87.2 | 87.2 | 87.2 | 87.2 | 87.2 | 87.2 | 87.2 | 87.2 | 87.2 | 87.2 | 87.2 | 87.2 | 87.2 |
| | Curvature radius $R_{B2}$ [mm] in TD of curved concave surface | | 87.2 | 87.2 | 87.2 | 87.2 | 87.2 | 87.2 | 87.2 | 87.2 | 87.2 | 87.2 | 87.2 | 87.2 | 87.2 | 87.2 |
| Relational expression | $R_{B1}/R_1$ | | 1.08 | 1.08 | 1.08 | 1.07 | 1.28 | 1.17 | 1.13 | 1.04 | 1.00 | 1.08 | 0.92 | 1.42 | 1.00 | 0.67 |
| | $R_{B2}/R_2$ | | 1.00 | 0.92 | 0.83 | 0.77 | 0.77 | 0.92 | 0.83 | 0.83 | 0.83 | 0.83 | 1.08 | 0.83 | 1.00 | 0.67 |
| | $R_1/R_2$ | | 0.92 | 0.85 | 0.77 | 0.72 | 0.60 | 0.79 | 0.74 | 0.80 | 0.83 | 0.77 | 1.18 | 0.59 | 1.00 | 1.00 |
| | Relational expression (1) ($\sqrt{(R_1 * R_2)}/\sqrt{(R_{B1} * R_{B2})}$) | | 0.96 | 1.00 | 1.05 | 1.11 | 1.01 | 0.97 | 1.03 | 1.07 | 1.10 | 1.05 | 1.00 | 0.92 | 1.00 | 1.50 |
| Evaluation | Peeling of polarized curved laminate 10 from mold 40 (pieces/100 pieces) | | 2 | 0 | 0 | 2 | 0 | 0 | 0 | 4 | 3 | 0 | 0 | 18 | 10 | 100 |

As shown in Table 1, it was clarified that, in each of Examples, any one of the following relational expression (A) or the following relational expression (B) was satisfied and the following relational expression (C) was not satisfied, and thus the peeling of the polarized curved laminate 10 from the mold 40 could be prevented.

On the other hand, in each of Comparative Examples, both of the following relational expression (A) and the following relational expression (B) were not satisfied or the following relational expression (C) was satisfied, and as a result, the peeling of the polarized curved laminate 10 from the mold 40 was frequently observed.

$$0.70 \leq R_{B1}/R_1 \leq 1.00 \text{ and } 1.00 \leq R_{B2}/R_2 \leq 1.40 \ldots (A)$$

$$1.00 \leq R_{B1}/R_1 \leq 1.40 \text{ and } 0.70 \leq R_{B2}/R_2 \leq 1.00 \ldots (B)$$

$$0.95 < R_{B1}/R_1 < 1.06 \text{ and } 0.95 < R_{B2}/R_2 < 1.06 \ldots (C)$$

## INDUSTRIAL APPLICABILITY

According to the present invention, in a case of manufacturing a lens for eyeglasses using a polarized curved laminate which has been bent into a curved shape by heat bending, that is, in a case of forming a resin layer on a curved concave surface of the polarized curved laminate, it is possible to accurately suppress or prevent the polarized curved laminate from falling off from a mold used for forming the resin layer. That is, the polarized curved laminate can be adhered to the mold with excellent adhesiveness. Therefore, a lens having excellent reliability can be manufactured with high yield. Accordingly, the present invention has industrial applicability.

## REFERENCE SIGNS LIST

10 Polarized curved laminate
11 First resin layer
12 Second resin layer
13 Polarized film
15 Polarized laminate

16 First adhesive layer
17 Second adhesive layer
20 Frame
21 Rim portion
22 Bridge portion
23 Temple portion
24 Nose pad portion
30 Lens
35 Resin layer
40 Mold
50 Protective film
100 Sunglasses
150 Multilayer laminate
200 Curved multilayer laminate

**Claims**

**1.** A method for manufacturing a lens, comprising:

a step of preparing a polarized laminate having an overall shape of a flat plate, which includes a polarized film, a first resin layer provided on one surface side of the polarized film, and a second resin layer provided on the other surface side of the polarized film;
a first step of obtaining a polarized curved laminate by bending the polarized laminate into a curved shape in which one surface of the polarized laminate forms a curved concave surface and the other surface of the polarized laminate forms a curved convex surface;
a second step of bringing the polarized curved laminate into close contact with a mold having a curved concave surface with a curvature radius $R_{B1}$ [mm] in one direction and a curvature radius $R_{B2}$ [mm] in an orthogonal direction orthogonal to the one direction, with the other surface side of the polarized curved laminate, which is the curved convex surface, facing the mold; and
a third step of forming a resin layer bonded to the polarized curved laminate on the one surface side of the polarized curved laminate, which is the curved concave surface, while maintaining the polarized curved laminate in close contact with the mold,
wherein, in the other surface of the polarized curved laminate, which is the curved convex surface, in a case where a curvature radius in the one direction is defined as $R_1$ [mm] and a curvature radius in the orthogonal direction is defined as $R_2$ [mm],
in the first step, the polarized curved laminate is obtained by bending the polarized laminate in a state in which any one of the following relational expression (A) or (B) is satisfied and the following relational expression (C) is not satisfied,

$$0.70 \leq R_{B1}/R_1 \leq 1.00 \text{ and } 1.00 \leq R_{B2}/R_2 \leq 1.40 \ldots (A),$$

$$1.00 \leq R_{B1}/R_1 \leq 1.40 \text{ and } 0.70 \leq R_{B2}/R_2 \leq 1.00 \ldots (B),$$

$$0.95 < R_{B1}/R_1 < 1.06 \text{ and } 0.95 < R_{B2}/R_2 < 1.06 \ldots (C).$$

**2.** The method for manufacturing a lens according to Claim 1,
wherein, in the first step, the polarized laminate is bent in a state in which the relational expression (A) is satisfied and a relationship of $1.07 < R_1/R_2 < 1.68$ is satisfied, or
in a state in which the relational expression (B) is satisfied and a relationship of $0.59 < R_1/R_2 < 0.93$ is satisfied.

**3.** The method for manufacturing a lens according to Claim 2,
wherein, in the first step, the polarized laminate is bent in a state in which the following relational expression (1) is further satisfied,

$$0.93 < \sqrt{\frac{R_1 \cdot R_2}{R_{B1} \cdot R_{B2}}} < 1.15 \quad \cdots \quad (1)$$

**4.** The method for manufacturing a lens according to Claim 1, wherein the curvature radius $R_{B1}$ and the curvature radius $R_{B2}$ are each independently 58 mm or more and 523 mm or less.

**5.** The method for manufacturing a lens according to Claim 1, wherein the one direction of the polarized curved laminate is MD and the orthogonal direction of the polarized curved laminate is TD.

**6.** The method for manufacturing a lens according to Claim 1, wherein the first resin layer and the second resin layer are each independently composed of a polycarbonate-based resin or a polyamide-based resin as a main material.

**7.** The method for manufacturing a lens according to Claim 6, wherein a glass transition point of the main material is 100°C or higher and 190°C or lower.

FIG. 1

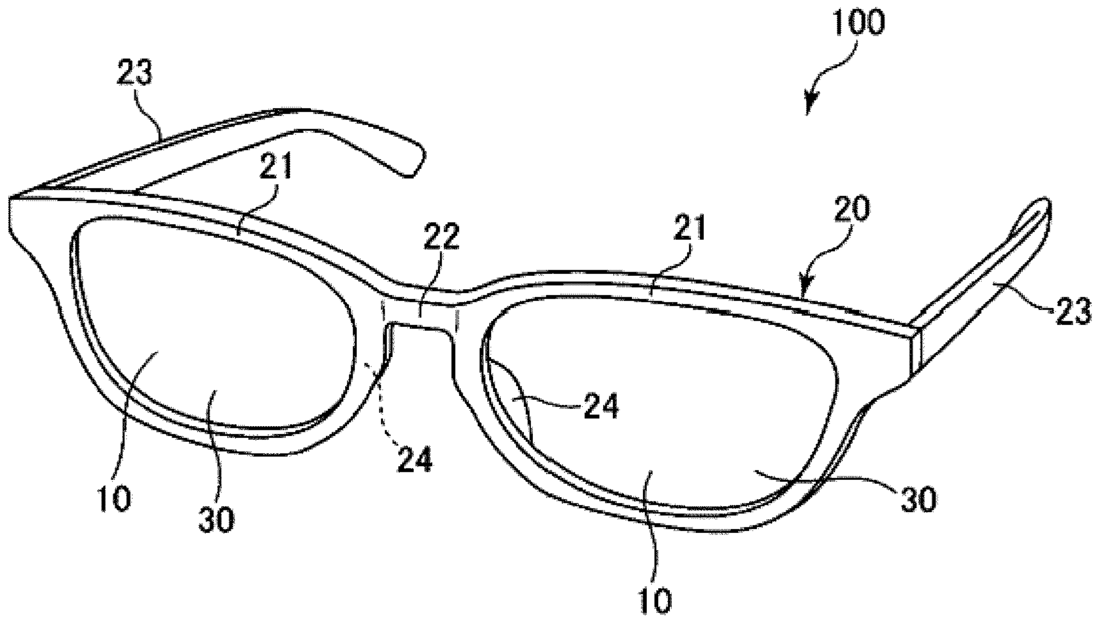

FIG. 2A

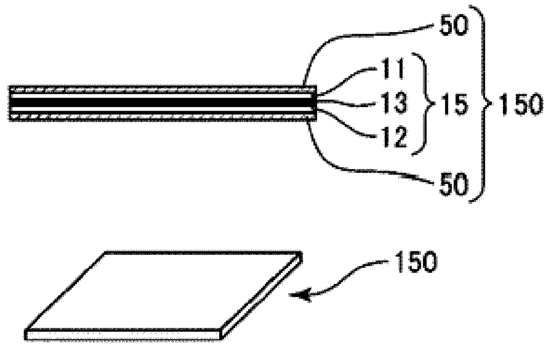


FIG. 2B

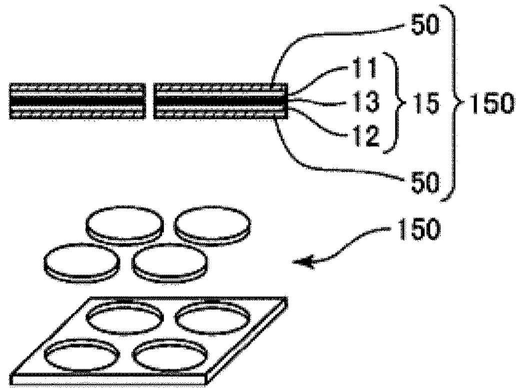


FIG. 2C

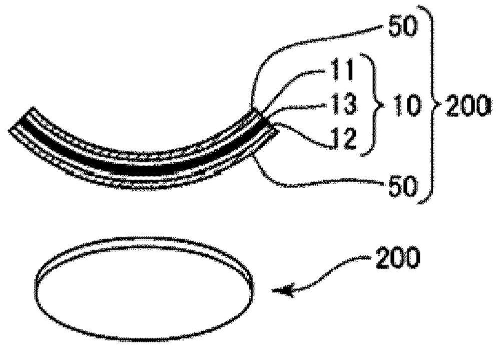


FIG. 2D

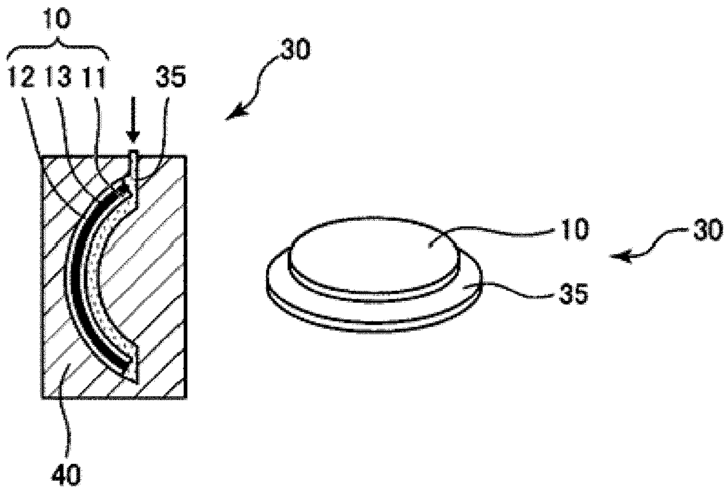

FIG. 3

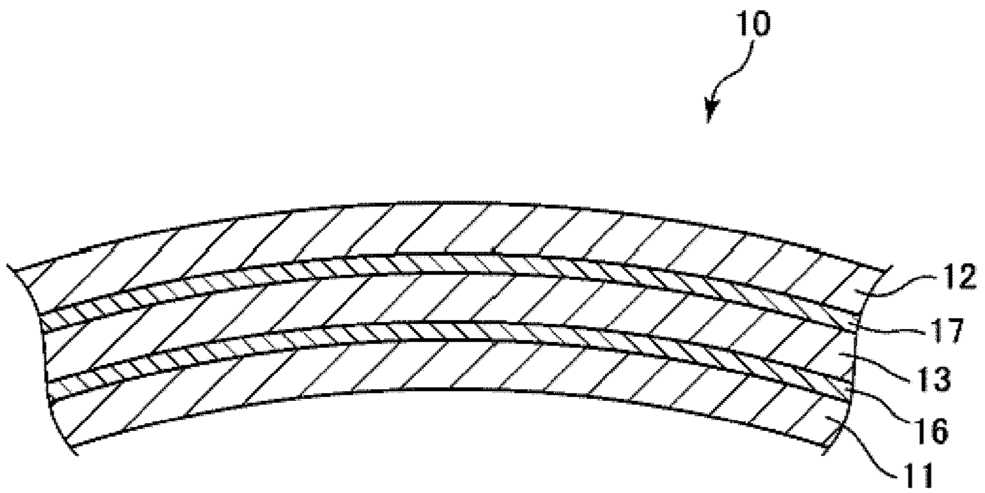

## INTERNATIONAL SEARCH REPORT

International application No.
**PCT/JP2024/013095**

### A. CLASSIFICATION OF SUBJECT MATTER

***G02B 3/00***(2006.01)i; ***G02B 5/30***(2006.01)i; ***G02C 7/12***(2006.01)i
FI: G02B3/00 Z; G02B5/30; G02C7/12

According to International Patent Classification (IPC) or to both national classification and IPC

### B. FIELDS SEARCHED

Minimum documentation searched (classification system followed by classification symbols)

G02B3/00; G02B5/30; G02C7/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-022293 A (SUMITOMO BAKELITE CO., LTD.) 02 February 2012 (2012-02-02) paragraphs [0008]-[0023], table 1, fig. 1 | 1-7 |
| Y | paragraphs [0008]-[0023], table 1, fig. 1 | 1-7 |
| Y | JP 2011-180266 A (YAMAMOTO KOGAKU CO., LTD.) 15 September 2011 (2011-09-15) paragraphs [0110], [0158], table 1, fig. 1-4 | 1-7 |
| A | paragraphs [0110], [0158], table 1, fig. 1-4 | 1-7 |
| A | WO 2020/040189 A1 (SUMITOMO BAKELITE CO., LTD.) 27 February 2020 (2020-02-27) entire text, all drawings | 1-7 |
| A | JP 2012-215866 A (SUMITOMO BAKELITE CO., LTD.) 08 November 2012 (2012-11-08) entire text, all drawings | 1-7 |
| A | JP 2022-122281 A (KIM, Choong-Deuk) 22 August 2022 (2022-08-22) entire text, all drawings | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/013095**

C. DOCUMENTS CONSIDERED TO BE RELEVANT

| Category* | Citation of document, with indication, where appropriate, of the relevant passages | Relevant to claim No. |
|---|---|---|
| A | WO 2011/105055 A1 (MITSUBISHI GAS CHEMICAL COMPANY, INC.) 01 September 2011 (2011-09-01) entire text, all drawings | 1-7 |
| A | WO 2018/096612 A1 (TALEX CO., LTD.) 31 May 2018 (2018-05-31) entire text, all drawings | 1-7 |
| A | US 2013/0052427 A1 (SANGSTER, C. L. et al.) 28 February 2013 (2013-02-28) the whole document, fig. 1-5 | 1-7 |

**INTERNATIONAL SEARCH REPORT**
**Information on patent family members**

International application No.
**PCT/JP2024/013095**

| Patent document cited in search report | Publication date (day/month/year) | Patent family member(s) | Publication date (day/month/year) |
|---|---|---|---|
| JP 2012-022293 A | 02 February 2012 | (Family: none) | |
| JP 2011-180266 A | 15 September 2011 | (Family: none) | |
| WO 2020/040189 A1 | 27 February 2020 | US 2021/0317340 A1<br>EP 3842214 A1<br>CN 112566770 A<br>JP 2020-37184 A<br>JP 2020-75512 A | |
| JP 2012-215866 A | 08 November 2012 | (Family: none) | |
| JP 2022-122281 A | 22 August 2022 | CN 114910990 A<br>KR 10-2380648 B1 | |
| WO 2011/105055 A1 | 01 September 2011 | US 2013/0010253 A1<br>US 2014/0151911 A1<br>EP 2541306 A1<br>TW 201213088 A | |
| WO 2018/096612 A1 | 31 May 2018 | US 2019/0293966 A1 | |
| US 2013/0052427 A1 | 28 February 2013 | US 2018/0072015 A1<br>EP 2565026 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009294445 A